# FASCICULE DE BREVET EUROPEEN

(11) **EP 3 162 740 B1**
(45) Date de publication et mention de la délivrance du brevet: **10.07.2019**
(21) Numéro de dépôt: 16194852.6
(22) Date de dépôt: 20.10.2016
(51) Int. Cl.: B65G 47/84, B65G 57/32, B65G 57/11, B65G 57/03

(54) **DISPOSITIF ET MÉTHODE DE SUPERPOSITION**
ÜBERLAGERUNGSVORRICHTUNG UND -METHODE
STACKING METHOD AND DEVICE

(30) Priorité: 29.10.2015 FR 1560342
(43) Date de publication de la demande: 03.05.2017
(73) Titulaire: C.E.R.M.E.X. CONSTRUCTIONS ETUDES ET RECHERCHES DE MATERIELS POUR L'EMBALLAGE D'EXPEDITION, 21910 Corcelles-Les-Cîteaux (FR)
(72) Inventeur: CHOPLIN, Gregory, 21910 CORCELLES LES CÎTEAUX (FR)
(74) Mandataire: Sidel Group

(56) Documents cités:
- WO-A1-2015/036197
- DE-A1-102013 103 309
- DE-B- 1 094 188
- JP-A- 2014 024 665
- KR-A- 20100 073 552
- US-A- 4 697 691
- US-A1- 2002 189 205

## Description

La présente invention relève du domaine des équipements de convoyage dans une ligne industrielle de conditionnement dans laquelle des produits circulent entre des postes et a pour objet, d'une part, un dispositif de convoyage particulier, et, d'autre part, un procédé mettant en oeuvre ce dispositif.

Dans ce domaine, les produits sont convoyés les uns à la suite des autres, en colonne unifilaire ou dans un flux en vrac, et l'invention vise plus particulièrement à proposer une solution pour superposer les produits au sein de la ligne, notamment pour créer des lots de produits comprenant au moins une colonne d'au moins deux produits.

US4645061 divulgue un principe de superposition, où le flux de produits entrants est divisé en deux canaux côte à côte. Ces canaux se rejoignent ensuite à une jonction située en contrebas, l'un des canaux y étant au-dessus de l'autre. Au niveau de cette jonction, un séquenceur sous forme d'étoile à deux étages assure que les produits soient bien l'un au-dessus de l'autre. Le recours à un entraînement gravitaire n'est toutefois pas satisfaisant car difficilement contrôlable et la différence de niveaux a un impact sur la configuration de la ligne.

US6467606 divulgue un autre principe dans lequel certains produits sont soulevés par des plateaux montés sur excentrique, pour être amenés sur un convoyeur circulant à un étage supérieur, ce qui permet ensuite de réunir les flux pour superposer les produits. US5101956 propose aussi des plateaux pour soulever certains produits, et les déposer ensuite directement sur ceux restés sur le convoyeur. Un tel principe exige toutefois une grande coordination et l'ajout d'un mécanisme et d'une zone dédiés à la saisie et la levée des produits.

US5092448 et EP0865988 reposent sur le principe de deux convoyeurs superposés, celui du haut circulant plus vite que celui du bas. Ces deux convoyeurs sont alimentés par un même convoyeur, qui amène les produits qui seront ensuite au niveau inférieur ou au niveau supérieur. Ce convoyeur d'alimentation a son extrémité mobile verticalement, et donc apte à amener les produits, soit sur le convoyeur du bas, soit sur le convoyeur du haut. Là encore, un tel principe de fonctionnement est particulièrement encombrant et très énergivore, puisque le convoyeur de produits entrants doit en permanence être déplacé de haut en bas.

Enfin, WO2015014514 divulgue un principe dans lequel les produits à soulever et déposer sur ceux du dessous le sont grâce à des manipulateurs montés sur un rail vertical du type rail à chariot entraînés magnétiquement. Une fois saisis et soulevés, ils sont accélérés pour rejoindre le produit devant eux, sur lequel ils doivent être posés. Un des inconvénients de ce type de réalisation est que les manipulateurs doivent être conçus et adaptés pour chaque produit particulier et la solution n'est donc pas versatile. En outre, rajouter une solution à moteur linéaire pour soulever les produits génère un surcoût non négligeable. JP 2014-24665 décrit un dispositif tel que décrit dans le préambule de la revendication 1.

L'invention vise à améliorer cet état de l'art en proposant une solution pour superposer des produits au sein d'une ligne de convoyage qui soit contrôlable, qui puisse éviter les surcoûts et/ou présenter un encombrement réduit.

Pour ce faire, l'invention propose de réaliser la superposition au coeur d'une étoile alimentant les produits sur des chariots, en y soulevant certains produits et en y ramenant les chariots n'ayant pas encore récolté le nombre de produits visé.

L'invention a ainsi pour objet un dispositif de convoyage de produits selon le revendication 1, qui comprend, d'une part, une étoile rotative munie, à sa périphérie, de logements ouverts pour y accueillir lesdits produits, et, d'autre part, de chariots ouverts et d'un circuit sur lequel ils circulent, les produits successifs passant de l'étoile aux chariots, le circuit amenant les produits jusqu'à une zone de déchargement en aval de l'étoile.

Ce dispositif est caractérisé en ce que le circuit présente une boucle fermée permettant de façon sélective de retourner un chariot à l'étoile avant déchargement du au moins un produit qu'il contient, pour y recevoir un autre produit.

L'invention a aussi pour objet une méthode mise en oeuvre par ce dispositif, à savoir un procédé de convoyage de produits selon la revendication 8, à l'aide d'une étoile rotative munie de logements périphériques pour lesdits produits, ainsi que d'un circuit sur lequel circulent des chariots destinés à recevoir les produits après l'étoile, procédé comprenant les étapes consistant essentiellement à recevoir successivement les produits dans les logements de l'étoile au niveau d'une zone d'entrée, à charger les produits depuis les logements jusque sur des chariots au niveau d'une zone de sortie, puis à dégager les produits depuis les chariots dans une zone de déchargement en aval.

Ce procédé est caractérisé en ce qu'il comprend une étape consistant essentiellement, après le chargement mais avant le dégagement, à ramener les chariots en zone de sortie pour y charger un autre produit.

L'invention sera mieux comprise grâce à la description ci-dessous, qui se base sur des modes de réalisations possibles, expliqués de façon illustrative et nullement limitative, en référence avec les figures annexées, dans lesquelles :

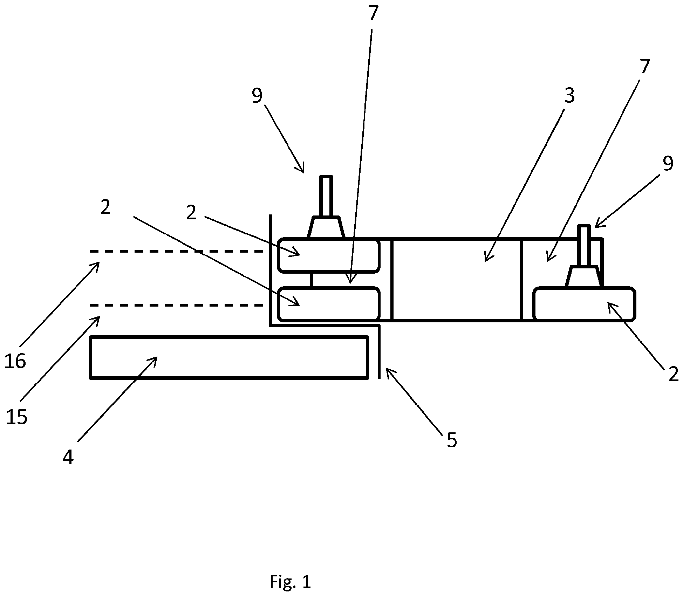

- la figure 1 montre une coupe au niveau de l'étoile, avec un produit déposé au premier niveau et un produit saisi en bas ;
- la figure 2 montre une vue d'ensemble du principe selon l'invention ;
- la figure 3 illustre une configuration possible au niveau de l'étoile ;
- la figure 4 montre le guidage et des rainures correspondantes au niveau du déviateur.

L'invention a donc tout d'abord comme objet un dispositif de convoyage 1 de produits 2, qui comprend, d'une part, une étoile 3 rotative munie, à sa périphérie, de logements 7 ouverts pour y accueillir lesdits produits 2, et, d'autre part, de chariots 5 ouverts et d'un circuit 4 sur lequel ils circulent, les produits 2 successifs passant de l'étoile 3 aux chariots 5, le circuit 4 amenant les produits 2 jusqu'à une zone de déchargement 6 en aval de l'étoile 3. Les chariots 5 sont donc ouverts de sorte à pouvoir recevoir les produits 2 depuis l'étoile 3 puis les dégager ultérieurement. Les logements 7, quant à eux, sont ouverts pour pouvoir recevoir des produits 2 depuis la périphérie, et les laisser ensuite sortir vers les chariots 5.

Le logement 7 fait face au chariot 5 et leurs ouvertures respectives permettent aux produits 2 de circuler de l'un à l'autre.

Comme il sera encore décrit plus loin, les produits 2 arrivent dans les logements 7 de l'étoile 3 au niveau du plan inférieur 15, depuis une vis 13 ou autre appareil de remplissage de l'étoile 3. Normalement, chaque logement 7 a donc un produit 2. Les produits 2 ont donc un mouvement circulaire au niveau de l'étoile 3 puis sont pris en charge sur les chariots 5. Les produits 2 peuvent donc être chargés dans l'étoile 3 rotative depuis une vis de mise au pas des produits 2, voire depuis une autre étoile contrarotative.

Les chariots 5 glissent le long d'un circuit 4 qui passe à proximité de l'étoile 3 pour que les produits 2 passent alors de l'étoile 3 sur les chariots 5 dans une zone de sortie 12. Lorsque le logement 7 a amené le produit 2 qu'il contient en zone de sortie 12, ledit produit 2 est transféré sur un chariot 5. La circulation du chariot 5 sur le circuit 4 l'amène ensuite à dégager la zone de sortie 12.

Selon l'invention, le circuit 4 présente une boucle fermée permettant de façon sélective de retourner un chariot 5 à l'étoile 3 avant déchargement du au moins un produit 2 qu'il contient, pour y recevoir un autre produit 2. Ainsi, le circuit 4 permet de ramener en zone de sortie 12 un chariot 5 avant qu'il ne soit déchargé du ou des produits 2 qu'il contient. Le circuit 4 peut amener un chariot 5, qui quitte la zone de sortie 12, soit à nouveau en zone de sortie 12 pour y récupérer un autre produit 2 depuis l'étoile 3, soit, s'il contient le nombre de produits 2 souhaité, jusqu'à une zone de déchargement 6 en aval où l'ensemble des produits 2 qu'il contient est alors transféré vers un traitement ultérieur, notamment la création de lots, et/ou emballage par fardelage, encaissage, etc.

Le circuit 4 comprend ainsi préférablement un aiguillage lui permettant de façon contrôlée d'amener les chariots 5, soit vers le poste de déchargement en aval où les produits 2 superposés sont requis, soit vers l'étoile 3 pour un nouveau chargement de produit 2. On comprend aussi qu'outre cet aiguillage divergent dirigeant les chariots 5, soit vers la zone de déchargement 6, soit à nouveau vers la zone de sortie 12, le circuit 4 présente un aiguillage convergent qui amène à la zone de sortie 12 des chariots 5 qui peuvent provenir, soit de la zone de déchargement 6, soit de la zone de sortie 12 d'étoile.

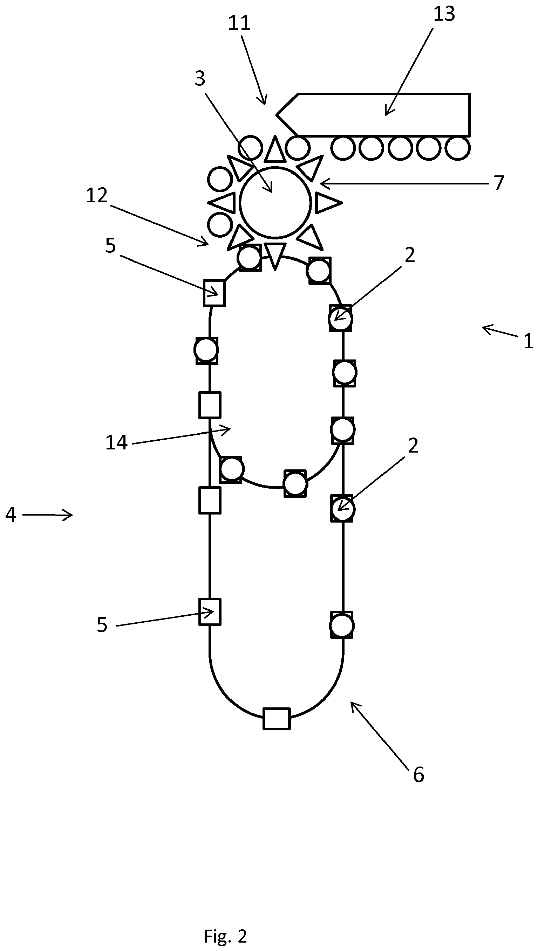

Les produits 2 débités par l'étoile 3 sont donc reçus par des chariots 5 qui n'ont alors aucun produit 2 ou par des chariots 5 qui ont déjà au moins un produit 2, comme le montre la figure 2.

Selon une caractéristique additionnelle possible, le dispositif de convoyage 1 comprend un moyen élévateur 8 agissant au niveau de l'étoile 3 pour soulever des produits 2 avant qu'ils ne soient déposés dans les chariots 5. Grâce à ce moyen élévateur 8, les produits 2 sont, le cas échéant, soulevés jusqu'à une hauteur leur permettant d'être largués ou déposés au-dessus d'un produit 2 déjà présent dans le chariot 5, voire plusieurs produits 2 déjà présents. C'est au court de son trajet, sous l'effet de la rotation de l'étoile 3, entre la zone d'entrée 11 de l'étoile 3, où ils arrivent dans les logements 7, et la zone de sortie 12, où ils quittent les logements 7, que le produit 2 est, lorsque nécessaire, soulevé pour arriver au-dessus du contenu du chariot 5 sur lequel il va être déposé : soit un seul produit 2, soit une colonne d'au moins deux produits 2.

Dans des modes de réalisation avantageux, le moyen élévateur 8 comprend une pluralité d'actionneurs 9 mobiles dans le sens vertical et munis, à leur extrémité inférieure, d'un moyen d'accrochage des produits 2, notamment d'une ventouse ou autre dispositif comme un moyen magnétique. Préférablement, un actionneur 9 est associé à chaque logement 7 pour soulever le produit 2 qui s'y trouve. L'actionneur 9 agit depuis le haut du produit 2, et, en position escamotée vers le haut, ne pénètre pas dans le logement 7. Par son action, il entraîne le produit 2 dans un mouvement vertical vers le haut, au sein même du logement 7, avant que le produit 2 ne le quitte pour aboutir sur un chariot 5.

L'actionneur 9 en position sortie arrive donc au produit 2 par le haut dans le plan inférieur 15 où il se trouve initialement. Par action mécanique du type ventouse ou même magnétique, il accroche le produit 2. En s'escamotant ensuite vers le haut, il entraîne dans sa translation le produit 2 jusqu'à une hauteur au moins égale à l'au moins un produit 2 déjà présent dans le chariot 5 qui l'emmènera ensuite en zone de déchargement 6.

Les actionneurs 9 sont préférablement du type actionneur linéaire piloté, à au moins deux positions, capable d'effectuer son mouvement de translation verticale à une vitesse compatible avec la vitesse de rotation de l'étoile 3.

Dans des réalisations possibles, les actionneurs 9 sont pneumatiques et leurs positions extrêmes sont définies par des butées, ce qui permet une réalisation simple et efficace du moyen élévateur 8. Préférablement, le corps de ces actionneurs 9 est monté lié à l'étoile 3, et la tige se translate parallèlement à l'axe de rotation de l'étoile 3, soit normalement verticalement.

Ainsi, préférablement, les actionneurs 9 s'étendent depuis la partie haute de l'étoile 3, au niveau des logements 7 périphériques, et agissent en déplaçant verticalement vers le haut les produits 2 au sein desdits logements 7. Chaque actionneur 9 est pilotable indépendamment. Une fois le produit 2 lâché sur le chariot 5, l'actionneur 9 reste en position verticale haute, ou position escamotée, ou retourne au niveau inférieur pour chercher un autre produit 2. Il est donc nécessaire pour piloter chaque actionneur 9, de savoir si le produit 2 qui arrive dans le logement 7 auquel il est associé sera finalement déposé sur un chariot 5 comprenant déjà au moins un autre produit 2.

Un actionneur 9 agit ainsi sur un produit 2 entre la zone d'entrée 11 et la zone de sortie 12. Il le libère en zone de sortie 12, et son éventuel retour vers le bas dépend de la nécessité ou pas de soulever le produit 2 qui sera dans le logement 7 auquel il est associé.

Selon une autre caractéristique additionnelle possible le dispositif comprend, en outre, un déviateur 10 qui guide les produits 2 hors de l'étoile 3 pour les amener sur les chariots 5 en suivant essentiellement la courbure du circuit 4, l'étoile 3, d'une part, et le déviateur 10, d'autre part, étant enchevêtrés verticalement. Ce déviateur 10 agit au niveau de la zone de sortie 12 et assure le passage vers le chariot 5 du produit 2 dans le logement 7 correspondant. Essentiellement, ce déviateur 10 ne suit pas la trajectoire des produits 2 dans l'étoile 3 et les guide hors de la périphérie de l'étoile 3. Le déviateur 10 se présente sous la forme d'un bec qui suit la courbure du circuit 4 à cet endroit.

Le déviateur 10 prend notamment éventuellement la forme de plaques 18 de guidage superposées et écartées les unes des autres, l'étoile 3 prenant notamment elle aussi la forme de disques 17 superposés et écartés les uns des autres, une plaque 18 de guidage s'étendant entre deux disques 17 successifs. Le logement 7 est donc délimité par les échancrures superposées de chaque disque 17. Le déviateur 10 agit avec une plaque 18 sur le produit 2 entre deux disques 17.

Le déviateur 10 peut agir sur un produit 2 qui se trouve dans le plan inférieur 15, à la hauteur à laquelle il arrive dans l'étoile 3, ou encore sur un produit 2 surélevé pour être déposé sur le contenu du chariot 5.

On notera que le produit 2 à rajouter sur le chariot 5 est suspendu sous l'actionneur 9 et doit ensuite être lâché. Il doit aussi être dévié de sa trajectoire le long de la périphérie de l'étoile 3 pour continuer sa trajectoire le long du circuit 4. Une action quasiment simultanée peut ainsi avoir lieu pour que l'actionneur 9 libère le produit 2 et que le déviateur 10 le guide dans son parcours le long de l'arrondi que présente le circuit 4 à cet endroit.

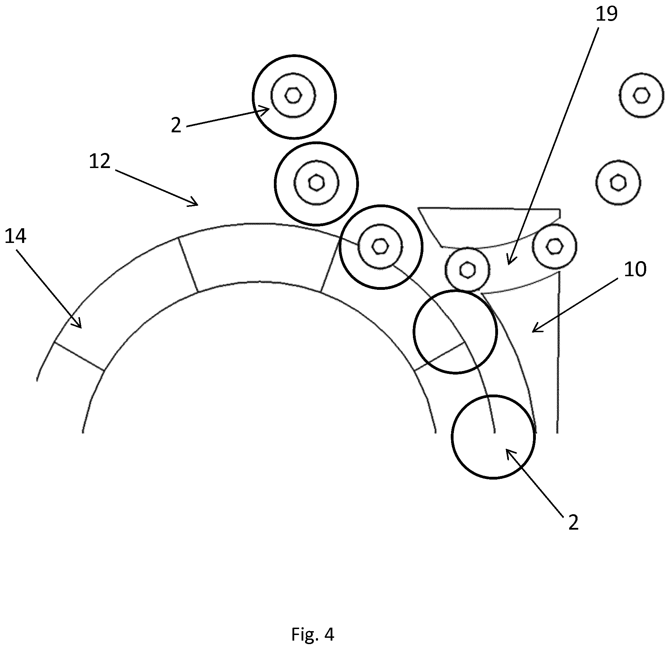

Selon une caractéristique additionnelle possible, le déviateur 10 présente des rainures 19 dans lesquelles les actionneurs 9 peuvent circuler. Ainsi, il n'est par exemple pas nécessaire de soulever l'actionneur 9 jusqu'au-dessus du déviateur 10, ce qui évite des mouvements trop amples dans les cas où l'actionneur 9 doit immédiatement chercher un autre produit 2 pour le soulever. Ces rainures 19, comme le montre la figure 4, suivent la trajectoire circulaire de l'actionneur 9 monté sur l'étoile 3.

L'invention a aussi pour objet un procédé mettant en oeuvre le dispositif tel que décrit ci-dessus, à savoir un procédé de convoyage de produits 2 à l'aide d'une étoile 3 rotative munie de logements 7 périphériques pour lesdits produits 2, ainsi que d'un circuit 4 sur lequel circulent des chariots 5 destinés à recevoir les produits 2 après l'étoile 3, procédé comprenant les étapes consistant essentiellement à recevoir successivement les produits 2 dans les logements 7 de l'étoile 3 au niveau d'une zone d'entrée 11, à charger les produits 2 depuis les logements 7 jusque sur des chariots 5 au niveau d'une zone de sortie 12, puis à dégager les produits 2 depuis les chariots 5 dans une zone de déchargement 6 en aval. Les produits 2 sont amenés de la zone d'entrée 11 à la zone de sortie 12 par la rotation de l'étoile 3. A la sortie de l'étoile 3, ils sont pris en charge par des chariots 5 qui les emmènent dans une zone de déchargement 6.

Les chariots 5, positionnés et pilotés indépendamment l'un de l'autre, peuvent se rapprocher au niveau de la zone de sortie 12 pour former un lot de produits 2. Le dispositif de convoyage 1 permet ainsi d'amener des produits 2 depuis une zone d'entrée 11 où ils arrivent dans l'étoile 3 jusqu'à une zone de déchargement 6 en aval, où ils poursuivent leur cheminement dans la ligne industrielle de conditionnement. Les produits 2 sont classiquement de forme cylindrique, avec un axe de symétrie de rotation qui est parallèle à l'axe de rotation de l'étoile 3. L'étoile 3 peut par exemple être intégrée dans une machine de type étiqueteuse ou remplisseuse de produit 2 tel que bouteille de liquide.

Selon l'invention, le procédé comprend une étape consistant essentiellement, après le chargement mais avant le dégagement, à ramener les chariots 5 en zone de sortie 12 pour y charger un autre produit 2.

Il est ainsi possible de ramener en zone de sortie 12 une fois, voire plusieurs fois de suite, le même chariot 5, et le charger ainsi avec plus de deux produits 2, de sorte que ce dernier libérera, lors du dégagement, plusieurs produits 2 simultanément, ces produits 2 provenant tous du même chariot 5, préférablement en étant superposés l'un au-dessus de l'autre.

Selon une caractéristique supplémentaire possible du procédé, il comprend une étape additionnelle consistant essentiellement à soulever des produits 2 au sein des logements 7, lorsqu'ils circulent entre la zone d'entrée 11 et la zone de sortie 12. On organise donc, en plus de leur déplacement horizontal depuis la zone d'entrée 11 jusque la zone de sortie 12, un déplacement vertical vers le haut pour les produits 2 qui seront déposés plus haut que le niveau le plus bas dans le chariot 5. On profite donc du trajet provoqué par l'étoile 3 pour amener le produit 2 à une hauteur de superposition.

L'actionneur 9 est alors préférablement baissé lors de son trajet de la zone de sortie 12 jusque la zone d'entrée 11, puis soulevé lors de son trajet de la zone d'entrée 11 jusque la zone de sortie 12. Lors du procédé, les produits 2 sont soulevés de façon sélective lors du trajet que l'étoile 3 leur faire subir de la zone d'entrée 11 à la zone de sortie 12.

Enfin, dans des modes de réalisation possibles, le soulèvement ou non des produits 2, la vitesse de rotation de l'étoile 3, la vitesse de circulation des chariots 5 ainsi que la recirculation ou non des chariots 5 vers l'étoile 3 sont coordonnés. Le dispositif de convoyage 1 est donc muni d'une unité de contrôle qui coordonne le mouvement des chariots 5 notamment leur circulation, soit de retour direct vers la zone de sortie 12, soit vers la zone de déchargement 6 et l'élévation sélective des produits 2 dans l'étoile 3. En outre, le débit de produits 2 entrant dans l'étoile 3 au niveau de la zone d'entrée 11, la vitesse de rotation de l'étoile 3, ainsi que la vitesse de circulation des chariots 5 en zone de sortie 12 doivent être coordonnés pour garantir le remplissage de tous les logements 7 et le vidage correspondant de la vis 13 en amont, mais aussi le vidage de l'étoile 3 en zone de sortie 12 et le nombre de produits 2 présents dans chaque chariot 5.

Cette unité de contrôle supervise précisément la position de chaque chariot 5 ainsi que le nombre de produits 2 qu'il comporte, ce qui lui permet de décider sélectivement d'envoyer les chariots 5 vers la zone de déchargement 6 ou de retour vers la zone de sortie 12, ainsi que de soulever ou non les produits 2.

Dans le mode de réalisation illustré notamment à la figure 2, le dispositif de convoyage 1 présente une vis 13 de séquencement des produits 2. Cette vis 13 assure, grâce au filetage périphérique dont elle est pourvue, une distance fixe entre les produits 2. Après la circulation le long de cette vis 13, les produits 2 arrivent les uns à la suite des autres dans les logements 7 périphériques de l'étoile 3, au niveau d'une zone d'entrée 11 où se fait donc la transition entre la vis 13 et l'étoile 3. Il est bien sûr envisageable que l'étoile 3 rotative soit alimentée en produits 2 par une autre étoile, par exemple. Les produits 2 arrivent dans l'étoile 3 au niveau d'une zone d'entrée 11 où ils quittent la vis 13 ou l'étoile amont, le cas échéant, pour continuer leur parcours dans le logement 7 de l'étoile 3 rotative.

Préférablement, l'étoile 3 est formée par une superposition verticale de disques 17 qui présentent chacun des échancrures à leur périphérie, qui, superposées, forment ensemble le logement 7. Entre deux disques 17 successifs s'étend une plaque 18 de guidage d'un déviateur 10. Un tel déviateur 10 a pour fonction de guider les produits 2 hors des logements 7, en opposant la tranche des plaques 18 aux produits 2 lorsqu'ils se trouvent dans le logement 7 au niveau de la zone de sortie 12 où ils doivent quitter l'étoile 3 pour continuer sur les chariots 5 le long du circuit 4. Le déviateur 10 prend donc une forme courbe et succède à des guides circulaires périphériques autour de l'étoile 3 qui évitent la sortie des produits 2. Le déviateur 10 se trouve au niveau de la zone de sortie 12.

Le déviateur 10 sert à dégager les produits 2 du logement 7 et les amener sur des chariots 5 qui circulent, au moment de ce transfert, dans la zone de sortie 12. Ces chariots 5 circulent sur un circuit 4 et reposent sur un principe électromagnétique de moteur linéaire, de sorte que leur mouvement est parfaitement contrôlé, en termes de position, vitesses, etc., ce qui permet de connaître et maîtriser totalement la position des chariots 5 à chaque instant. Les chariots 5 sont donc amenés en zone de sortie 12 grâce à la configuration géométrique du circuit 4 qui y passe. Le circuit 4 a une forme courbe en miroir à la courbure de l'étoile 3, voir figure 2. Les logements 7 de l'étoile 3 sont ouverts à l'extérieur, les chariots 5 étant eux aussi ouverts. Lors du transfert de l'étoile 3 vers les chariots 5, leurs zones d'ouverture se font face et l'action de déviation du déviateur 10 suffit à faire passer les produits 2 de l'un vers l'autre. Ainsi, le déviateur 10 pousse tout simplement le produit 2 hors du logement 7 dans le chariot 5. Le produit 2 est ensuite entraîné par le chariot 5 le long du circuit 4.

Le dispositif de convoyage 1 ayant pour but d'amener des produits 2 superposés en aval, les chariots 5 peuvent, après avoir récolté un produit 2, revenir au niveau de la zone de sortie 12 pour recevoir un autre produit 2, qui viendra alors sur le au moins un autre produit 2 déjà présent. On note qu'il est possible de superposer plus de deux produits 2 sur un même chariot 5, ce qui revient alors à faire passer le produit 2 en zone de sortie 12 plus de deux fois. Le dispositif de convoyage 1 est donc muni, à la sortie de la zone de sortie 12, d'une part, d'une boucle courte pour le retour direct des chariots 5 vers la zone de sortie 12 sans passer par la zone de déchargement 6, et, d'autre part, d'une boucle longue pour faire passer les chariots 5 en zone de déchargement 6 pour les y vider, avant leur retour en zone de sortie 12 pour un nouveau cycle complet.

Le circuit 4 sur lequel évoluent les chariots 5 présente un rail qui s'étend depuis la zone de sortie 12 et jusqu'à une zone de déchargement 6 où les produits 2 sont sortis des chariots 5 pour une exploitation dans la ligne industrielle de traitement. L'avantage du recours à des chariots 5 pilotés par effet magnétique est qu'ils sont mobiles l'un par rapport à l'autre et il est alors facile de créer un lot en rapprochant des chariots 4 initialement écartés. En aval de la zone de déchargement 6, le circuit 4 présente ensuite une portion pour ramener les chariots 5 jusqu'à la zone de sortie 12, pour un nouveau cycle de chargement de plusieurs produits 2 puis déchargement. Le circuit 4 forme donc deux boucles fermées, une pour un retour direct à la zone de sortie 12 et une pour un passage par la zone de déchargement 6.

Le circuit 4 présente aussi une boucle de retour 14 qui permet aux chariots 5 munis d'au moins un produit 2 de retourner jusqu'au niveau de la zone de sortie 12 pour y recevoir un autre produit 2 qui viendra alors être déposé sur le au moins un produit 2 déjà présent, pour les superposer au coeur de l'étoile 3. Cette boucle de retour 14 s'étend préférablement en amont de la zone de déchargement 6 : après l'étoile 3, le chariot 5 peut y circuler avant d'aller en zone de déchargement 6. Après la zone de sortie 12, les chariots 5 vont donc, soit vers la zone de déchargement 6 s'ils transportent le nombre de produits 2 attendus, soit vers la zone de sortie 12 si la colonne de produits 2 superposés qu'ils véhiculent n'a pas encore atteint le nombre de produits 2 souhaité.

En aval de la zone de sortie 12, le circuit 4 présente donc un aiguillage qui permet de faire continuer le mouvement des chariots 5, soit vers la zone de sortie 12, soit vers la zone de déchargement 6.

Avoir la boucle de retour 14 directement en aval de l'étoile 3, en amont de la zone de déchargement 6, permet notamment que tous les chariots 5 qui arrivent en zone de déchargement 6 aient effectivement le nombre attendu de produits 2 superposés. Cela évite aussi d'avoir un trop grand nombre de chariots 5 qui, par exemple, traverseraient la zone de déchargement 6 sans y libérer leur charge, puis continueraient le retour vers la zone de sortie 12 pour y recevoir un autre produit 2.

Les produits 2 sont apportés dans l'étoile 3 par la vis 13 ou autres au niveau d'un plan inférieur 15 horizontal. Ils sont éventuellement maintenus à cette hauteur, par un fond ou par le moyen élévateur 8 lui-même, lors de leur trajet dans l'étoile 3 jusqu'à la zone de sortie 12. C'est à cette hauteur aussi que se trouve la surface d'accueil des chariots 5. Lorsque le chariot 5 qui arrive est dépourvu de produit 2 et qu'il arrive donc pour accueillir son premier produit 2, ce dernier circule essentiellement dans le même plan depuis la zone d'entrée 11 où il est arrivé dans le logement 7 jusqu'à la zone de sortie 12 où il rejoint le chariot 5. La position du chariot 5 qui arrive en zone de sortie 12 est contrôlée et coordonnée avec la position des logements 7. En zone de sortie 12, un chariot 5 est donc en vis-à-vis d'un logement 7. Le mouvement des chariots 5 et celui de l'étoile 3 sont synchronisés, préférablement par une unité de contrôle centrale.

Lorsque le chariot 5 qui arrive pour recevoir un produit 2 en zone de sortie 12 en a déjà un, le nouveau produit 2 doit être déposé dans un plan décalé du plan inférieur 15 d'une hauteur qui correspond essentiellement à la hauteur verticale d'un produit 2, dit plan de premier niveau 16, ou encore plus haut si le chariot 5 a déjà plus d'un produit 2. Comme les produits 2 arrivent toutefois en zone d'entrée 11 au niveau du plan inférieur 15, il est nécessaire de les soulever jusqu'à au moins le plan de premier niveau 16, voire plus haut pour des superpositions de plus de deux produits 2 sur un même chariot 5.

Pour ce faire, le dispositif de convoyage 1 est muni d'un moyen élévateur 8 agissant sur les produits 2 pris en charge par l'étoile 3 entre la zone d'entrée 11 et la zone de sortie 12. Ce moyen élévateur 8 permet de soulever les produits 2 depuis le plan inférieur 15 jusqu'au plan de premier niveau 16, voire plus haut dans les cas d'une superposition de plus de deux produits 2. On comprendra qu'il n'est pas nécessaire de soulever tous les produits 2 qui arrivent en zone d'entrée 11, puisque certains d'entre eux seront les premiers dans le chariot 5 correspondant.

Ce moyen élévateur 8 agit pour saisir les produits 2 par le dessus, notamment avec une solution d'aspiration par ventouse ou encore d'une solution par aimantation. Il prend la forme d'une pluralité d'actionneurs 9, chaque actionneur 9 étant associé à un logement 7 et capable d'agir dans une direction verticale pour déplacer le long de cette direction le produit 2 qui s'y trouve. Ainsi, un actionneur 9 est embarqué sur l'étoile 3 et positionné pour s'étendre depuis le haut au coeur du logement 7. En position escamotée, il ne s'étend préférablement pas jusqu'aux produits positionnés dans le plan inférieur 15, sauf s'il sert bien sûr à en conserver la position verticale dans le plan inférieur 15. En position active, il arrive au contact de ces produits 2, puisqu'ils arrivent dans l'étoile 3 à cette hauteur. L'actionneur 9 peut donc agir dans la direction verticale dans le logement 7. Lorsqu'un produit 2 à soulever se trouve dans le logement 7, au niveau du plan inférieur 15, l'actionneur 9 est mis en oeuvre pour l'entraîner et le soulever, en profitant éventuellement du guidage que forment le logement 7 et les guides périphériques entre la zone d'entrée 11 et la zone de sortie 12.

L'actionneur 9 est donc piloté et, lorsque nécessaire, descend jusqu'à pouvoir saisir un produit 2 qui se trouve dans le plan inférieur 15, puis se rétracte pour le soulever et l'amener au plan de premier niveau 16, voire plus haut. Le moyen élévateur 8 comprend ainsi autant d'actionneurs 9 que l'étoile 3 a de logements 7. L'extension et la rétraction des actionneurs 9 sont pilotées, de sorte à pouvoir agir à l'unité sur chaque produit 2 à déposer en zone de sortie 12 sur un chariot 5 en comprenant déjà au moins un.

Les actionneurs 9 sont donc embarqués sur l'étoile 3 et tournent avec elle, en étant associés à un logement 7 chacun. Ils sont pilotables indépendamment et donc mobiles verticalement l'un par rapport à l'autre. Leur éventuel mouvement vertical est coordonné avec le nombre de produit 2 ou produits 2 que transporte déjà le chariot 5 sur lequel aboutit le produit 2 qui se trouve dans le logement 7 auquel l'actionneur 9 est associé.

Lorsqu'il doit entrer en fonctionnement, l'actionneur 9 est donc descendu pour arriver contre le produit 2 dans le plan inférieur 15 après que celui-ci ait été accueilli dans l'étoile 3. L'extension de l'actionneur 9 vers le bas peut démarrer après réception du produit 2 dans le logement 7 correspondant, ou être légèrement anticipé. L'actionneur 9 doit ensuite être rétracté vers le haut jusqu'à la bonne hauteur, et ce avant d'arriver dans la zone de sortie 12. Il doit ensuite éventuellement immédiatement redescendre jusqu'à pouvoir saisir un nouveau produit 2 arrivant dans le logement 7 au niveau de la zone d'entrée 11, dans le plan inférieur 15.

Grâce à la boucle de retour 14, les chariots 5 reçoivent donc plusieurs produits 2 successivement dans la zone de sortie 12, jusqu'à ce qu'ils forment une colonne d'au moins deux produits 2, et ce avant de passer par la zone de déchargement 6. Le moyen élévateur 8 sert donc à amener de façon sélective et contrôlée les produits 2 à la bonne hauteur en zone de sortie 12.

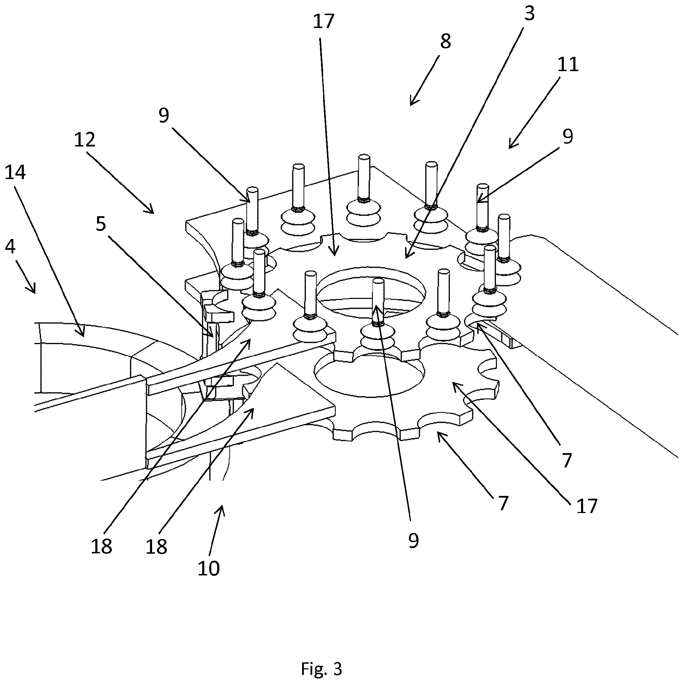

Le dispositif de convoyage 1 comprend aussi un déviateur 10 qui sert à forcer les produits 2 à sortir de l'étoile 4 et à passer sur le chariot 5. Une telle coopération entre l'étoile 4 et le déviateur 10 est donc requise à chaque étage de la colonne à construire sur le chariot 5. De façon classique, le déviateur 10 est courbe et coopère avec les produits 2 pour les pousser par l'arrière alors qu'ils se trouvent encore dans le logement 7. Le déviateur 10 s'étend donc au moins localement au-dessus de l'étoile 3, pour accompagner les produits 2 depuis leur partie arrière. Afin de répéter une telle configuration à chaque étage pour dégager le produit 2 de l'étoile 3 et l'amener dans le logement 7, l'étoile 3 et le déviateur 10 prennent la forme, chacun, d'une superposition d'éléments écartés l'un de l'autre pour recevoir entre eux un des éléments de l'autre, voir figure 3 qui illustre une telle construction à deux étages.

Ainsi, le logement 7 est défini par la superposition des échancrures périphériques de chacun des disques 17 de l'étoile 3. Le produit 2 soulevé par le moyen élévateur 8 entre la zone d'entrée 11 et la zone de sortie 12 circule donc contre les disques 17 verticalement, ce qui contribue à le guider lors de ce mouvement. En zone de sortie 12, la plaque 18 du niveau où se trouve le produit 2 le guide hors du logement 7 vers le chariot 5. L'attraction exercée par l'actionneur 9 pour soulever le produit 2 doit donc être interrompue de façon coordonnée.

Dans les cas où seuls deux produits 2 doivent être superposés sur les chariots 5, il est possible d'avoir recours à des actionneurs 9 linéaires bistables, dont la position est délimitée par deux butées. Des actionneurs 9 du type vérin pneumatique sont alors particulièrement indiqués. Il est toutefois envisageable de régler la position escamotée de l'actionneur 9 pour que le produit 2 qu'il tient en hauteur subisse une légère chute libre lorsqu'il est lâché et déposé sur le produit 2 en dessous.

On notera que dans les réalisations nécessitant la superposition de plus de deux produits 2, il existe plus de deux hauteurs souhaitées du produit 2 en zone de sortie 12. Le pilotage de l'actionneur 9 doit alors éventuellement être plus élaboré, puisqu'il doit avoir plusieurs positions de butées et qu'il est nécessaire de savoir non seulement si le chariot 5 provient d'une recirculation avant décharge mais aussi combien de telles recirculations il a déjà subies. Pour obtenir facilement une colonne verticale de plus de deux produits 2 sur le même chariot 3, il est possible de prévoir un actionneur 9 bistable, qui lâche le produit 2 une fois qu'il se trouve en position haute et le laisse arriver librement sous l'effet de la gravité sur le ou les produits 2 en dessous, quel qu'en soit le nombre. La position la plus haute est donc telle que le produit 2 peut être lâché depuis cette hauteur et arriver, guidé par le logement 7 et le chariot 5, sur le produit 2 déjà présent, ou au moins le produit 2 le plus haut de la colonne déjà présente dans le chariot 5.

L'actionneur 9 se trouvant au-dessus du produit 2 et suivant le mouvement de l'étoile 3, il est nécessaire d'éviter une collision entre l'actionneur 9 et le déviateur 10 lorsque l'actionneur 9 a lâché le produit 2 en zone de sortie 12 et se dirige vers la zone d'entrée 11. Pour ce faire, le déviateur 10 est muni de rainures 19 en arc de cercle, qui correspondent au trajet que suit l'actionneur 9. Ces rainures 19 permettent à l'actionneur 9 de continuer son mouvement circulaire sans être gêné par le déviateur 10, soit lors de sa descente vers une nouvelle prise, soit lors de sa remontée depuis une dépose en zone de sortie 12. En outre, pour un gain de temps, il peut être envisageable de ne pas remonter entièrement l'actionneur 9 après qu'il ait lâché le produit 2 et avant qu'il n'en reprenne un autre.

Pour laisser un temps suffisant à l'actionneur 9 pour effectuer un éventuel cycle de montée et descente à chaque tour, il est avantageux de disposer les éléments de sorte que la zone d'entrée 11 et la zone de sortie 12 sont environ diamétralement opposées, ce qui laisse un demi-tour à l'actionneur 9 pour s'escamoter vers le haut, et un demi-tour pour chercher un produit 2 dans le plan inférieur 15. Bien entendu, la position relative de la zone d'entrée 11 et de la zone de sortie 12, qui dépendent de la position relative du circuit 4, de l'étoile 3, et de la vis 13 ou autre moyen d'alimentation de l'étoile 3, peut être adaptée à chaque cas. Par exemple, il est envisageable que le parcours de la zone d'entrée 11 jusque la zone de sortie 12 soit plus long que le parcours depuis la zone de sortie 12 jusque la zone d'entrée 11, notamment dès lors que l'actionneur 9 est piloté pour ne remonter que partiellement après avoir déposé le produit 2 et avant d'en prendre un autre.

Ainsi, grâce à un pilotage spécifique de chaque actionneur 9, il est possible de réaliser, au sein même de l'étoile 3, la superposition verticale de produits 2 sur chaque chariot 5 successif. Le recours à un circuit 4 sur lequel les chariots 5 sont disposés et suivis à l'unité permet de savoir exactement quel chariot 5 sera reçu par quel logement 7, et, partant, la nécessité ou non d'élever le produit 2 correspondant, et éventuellement de quelle hauteur. Le dispositif de convoyage a donc une unité de contrôle qui assure la coordination entre le mouvement de l'étoile 3, le mouvement des chariots 5, et l'action du moyen élévateur 8.

Grâce à l'invention, il est ainsi possible d'obtenir une solution efficace, compacte et précise pour superposer des produits 2. Le recours à des chariots 5 mobiles sur un circuit 4 de type moteur linéaire permet de contrôler leur position à l'unité et donc de piloter chacun de façon sélective. La superposition au sein de l'étoile 3 contribue notamment à une réalisation particulièrement compacte.

Bien que la description ci-dessus se base sur des modes de réalisation particuliers, elle n'est nullement limitative de la portée de l'invention.

## Revendications

1. Dispositif de convoyage (1) de produits (2), qui comprend, d'une part, une étoile (3) rotative munie, à sa périphérie, de logements (7) ouverts pour y accueillir lesdits produits (2), et, d'autre part, de chariots (5) ouverts et d'un circuit (4) sur lequel ils circulent, les produits (2) successifs passant de l'étoile (3) aux chariots (5), le circuit (4) amenant les produits (2) jusqu'à une zone de déchargement (6) en aval de l'étoile (3), le circuit (4) présentant une boucle fermée,
**caractérisé en ce que** le dispositif comprend une unité de contrôle qui coordonne le mouvement des chariots (5), ladite boucle fermée permettant de façon sélective de retourner un chariot (5) à l'étoile (3) avant déchargement du au moins un produit (2) qu'il contient, pour y recevoir un autre produit (2).

2. Dispositif selon la revendication 1, **caractérisé en ce que**
il comprend un moyen élévateur (8) agissant au niveau de l'étoile (3) pour soulever des produits (2) avant qu'ils ne soient déposés dans les chariots (5).

3. Dispositif selon la revendication 2, **caractérisé en ce que**
le moyen élévateur (8) comprend une pluralité d'actionneurs (9) mobiles dans le sens vertical et munis, à leur extrémité inférieure, d'un moyen d'accrochage des produits (2).

4. Dispositif selon la revendication 3, où
les actionneurs (9) sont pneumatiques et leurs positions extrêmes sont définies par des butées.

5. Dispositif selon l'une quelconque des revendications 3 ou 4, où
les actionneurs (9) s'étendent depuis la partie haute de l'étoile (3), au niveau des logements (7) périphériques, et agissent en déplaçant verticalement vers le haut les produits (2) au sein desdits logements (7).

6. Dispositif selon l'une quelconque des revendications 1 à 5, **caractérisé en ce que**
il comprend, en outre, un déviateur (10) qui guide les produits (2) hors de l'étoile (3) pour les amener sur les chariots (5) en suivant essentiellement la courbure du circuit (4), l'étoile (3), d'une part, et le déviateur (10), d'autre part, étant enchevêtrés verticalement.

7. Dispositif selon l'une quelconque des revendications 3 ou 4, et selon la revendication 6, où
le déviateur (10) présente des rainures (19) dans lesquelles les actionneurs (9) peuvent circuler.

8. Procédé de convoyage de produits (2) à l'aide d'une étoile (3) rotative munie de logements (7) périphériques pour lesdits produits (2), ainsi que d'un circuit (4) sur lequel circulent des chariots (5) destinés à recevoir les produits (2) après l'étoile (3), procédé comprenant les étapes consistant essentiellement à recevoir successivement les produits (2) dans les logements (7) de l'étoile (3) au niveau d'une zone d'entrée (11), à charger les produits (2) depuis les logements (7) jusque sur des chariots (5) au niveau d'une zone de sortie (12), puis à dégager les produits (2) depuis les chariots (5) dans une zone de déchargement (6) en aval,
**caractérisé en ce que**
il comprend une étape consistant essentiellement, après le chargement mais avant le dégagement, à ramener les chariots (5) en zone de sortie (12) pour y charger un autre produit (2).

9. Procédé selon la revendication 8, **caractérisé en ce que**
il comprend une étape additionnelle consistant essentiellement à soulever des produits (2) au sein des logements (7), lorsqu'ils circulent entre la zone d'entrée (11) et la zone de sortie (12).

10. Procédé selon la revendication 9, où
le soulèvement ou non des produits (2), la vitesse de rotation de l'étoile (3), la vitesse de circulation des chariots (5) ainsi que la recirculation ou non des chariots (5) vers l'étoile (3) sont coordonnés.

## Patentansprüche

1. Fördereinrichtung (1) für Produkte (2), welche einerseits einen Drehstern (3) umfasst, der an seinem Umfang mit offenen Aufnahmen (7) zum Aufnehmen der Produkte (2) darin versehen ist, und andererseits offene Wagen (5) und einen Kreis (4), auf dem diese umlaufen, wobei die aufeinander folgenden Produkte (2) vom Stern (3) zu den Wagen (5) übergeben werden, wobei der Kreis (4) die Produkte (2) bis zu einem dem Stern (3) nachgelagerten Entladebereich (6) mitnimmt, wobei der Kreis (4) eine geschlossene Schleife aufweist, **dadurch gekennzeichnet, dass** die Vorrichtung eine Steuereinheit umfasst, welche die Bewegung der Wagen (5) koordiniert, wobei die geschlossene Schleife ermöglicht, selektiv einen Wagen (5) vor dem Entladen des wenigstens einen Produkts (2), das er enthält, zum Stern (3) zurückzutransportieren, um hier ein weiteres Produkt (2) zu empfangen.

2. Einrichtung nach Anspruch 1, **dadurch gekennzeichnet, dass**
sie ein Hebemittel (8) umfasst, das am Stern (3) arbeitet, um Produkte (2) anzuheben, bevor sie in den Wagen (5) abgelegt werden.

3. Einrichtung nach Anspruch 2, **dadurch gekennzeichnet, dass**
das Hebemittel (8) mehrere Aktuatoren (9) umfasst, die in der vertikalen Richtung beweglich sind und an ihrem unteren Ende mit einem Mittel zum Anhängen der Produkte (2) versehen sind.

4. Einrichtung nach Anspruch 3, wobei
die Aktuatoren (9) pneumatisch sind und ihre Endpositionen durch Anschläge definiert sind.

5. Einrichtung nach einem der Ansprüche 3 oder 4, wobei die Aktuatoren (9) sich vom oberen Teil des Sterns (3) aus im Bereich der Aufnahmen (7) an dessen Umfang erstrecken und wirken, indem sie die Produkte (2) innerhalb der Aufnahmen (7) vertikal nach oben bewegen.

6. Einrichtung nach einem der Ansprüche 1 bis 5, **dadurch gekennzeichnet, dass**
sie außerdem eine Ablenkvorrichtung (10) umfasst, welche die Produkte (2) aus dem Stern (3) hinausleitet, um sie den Wagen (5) zuzuführen, wobei sie im Wesentlichen der Krümmung des Kreises (4) folgt, wobei der Stern (3) einerseits und die Ablenkvorrichtung (10) andererseits vertikal miteinander verblockt sind.

7. Einrichtung nach einem der Ansprüche 3 oder 4 und nach Anspruch 6, wobei
die Ablenkvorrichtung (10) Rillen (19) aufweist, in welchen die Aktuatoren (9) umlaufen können.

8. Verfahren zum Fördern von Produkten (2) mithilfe eines Drehsterns (3), der mit an seinem Umfang vorhandenen Aufnahmen (7) für die Produkte (2) versehen ist, sowie eines Kreises (4), auf dem Wagen (5) umlaufen, die dazu bestimmt sind, die Produkte (2) nach dem Stern (3) aufzunehmen, wobei das Verfahren die Schritte umfasst, die im Wesentlichen darin bestehen, die Produkte (2) nacheinander in den Aufnahmen (7) des Sterns (3) an einem Eingangsbereich (11) aufzunehmen, die Produkte (2) an einem Ausgangsbereich (12) aus den Aufnahmen (7) auf Wagen (5) zu laden, danach in einem nachgelagerten Entladebereich (6) die Produkte (2) von den Wagen (5) abzuladen,
**dadurch gekennzeichnet, dass**
es einen Schritt umfasst, der im Wesentlichen darin besteht, nach dem Laden, jedoch vor dem Entladen die Wagen (5) in den Ausgangsbereich (12) zurückzutransportieren, um hier ein weiteres Produkt (2) zu laden.

9. Verfahren nach Anspruch 8, **dadurch gekennzeichnet, dass**
es einen zusätzlichen Schritt umfasst, der im Wesentlichen darin besteht, Produkte (2) innerhalb der Aufnahmen (7) anzuheben, wenn sie zwischen dem Eingangsbereich (11) und dem Ausgangsbereich (12) umlaufen.

10. Verfahren nach Anspruch 9, wobei
das Anheben oder Nichtanheben der Produkte (2), die Rotationsgeschwindigkeit des Sterns (3), die Umlaufgeschwindigkeit der Wagen (5) sowie die Rückführung oder Nichtrückführung der Wagen (5) zum Stern (3) koordiniert werden.

## Claims

1. Device (1) for conveying products (2), which comprises, on the one hand, a rotary star (3) provided, at its periphery, with open housings (7) to receive said products (2), and, on the other hand, open carriages (5) and a circuit (4) on which they circulate, the successive products (2) passing from the star (3) to the carriages (5), the circuit (4) feeding the products (2) to an offloading zone (6) downstream of the star (3), the circuit (4) being a closed loop,
**characterized in that** the device comprises a control unit that coordinates the movement of the carriages (5), said closed loop enabling selective return of a carriage (5) to the star (3) before offloading the at least one product (2) that it contains, to receive therein another product (2).

2. Device according to Claim 1, **characterized in that** it comprises an elevator means (8) acting at the level of the star (3) to lift the products (2) before they are deposited in the carriages (5).

3. Device according to Claim 2, **characterized in that** the elevator means (8) comprises a plurality of actuators (9) mobile in the vertical direction and provided, at their lower end, with a means for attaching the products (2).

4. Device according to Claim 3, in which the actuators (9) are pneumatic and their extreme positions are defined by abutments.

5. Device according to either one of Claims 3 or 4, in which
the actuators (9) extend from the upper part of the star (3) at the level of the peripheral housings (7) and act by moving vertically upward the products (2) in said housings (7).

6. Device according to any one of Claims 1 to 5, **characterized in that**
it further comprises a deflector (10) that guides the products (2) out of the star (3) to move them onto the carriages (5) essentially along the curvature of the circuit (4), the star (3), on the one hand, and the deflector (10), on the other hand, being interleaved vertically.

7. Device according to either one of Claims 3 or 4, and according to Claim 6, in which
the deflector (10) has grooves (19) in which the actuators (9) can circulate.

8. Method of conveying products (2) with the aid of a rotary star (3) provided with peripheral housings (7) for said products (2), as well as a circuit (4) on which circulate carriages (5) intended to receive the products (2) after the star (3), method comprising the steps essentially consisting in successively receiving the products (2) in the housings (7) of the star (3) at the level of an entry zone (11), loading the products (2) from the housings (7) onto the carriages (5) at the level of an exit zone (12), then disengaging the products (2) from the carriages (5) in a downstream offloading zone (6),
**characterized in that**
it comprises a step essentially consisting, after loading but before disengagement, in bringing the carriages (5) into outlet zone (12) to load therein another product (2).

9. Method according to Claim 8, **characterized in that** it comprises an additional step essentially consisting in lifting the products (2) in the housings (7) when they circulate between the entry zone (11) and the exit zone (12).

10. Method according to Claim 9, in which
lifting or not lifting the products (2), the rotation speed of the star (3), the circulation speed of the carriages (5) and recirculating or not recirculating the carriages (5) to the star (3) are coordinated.
